# EUROPEAN PATENT APPLICATION

(11) **EP 4 407 252 A1**
(43) Date of publication of application: **31.07.2024**
(21) Application number: 23153226.8
(22) Date of filing: 25.01.2023
(51) Int. Cl.: F24H 9/00, F24H 4/00

(54) **HANDLING DEVICE FOR A HEAT PUMP**

(71) Applicant: BDR Thermea Group B.V., 7332 BD Apeldoorn (NL)
(72) Inventor: SIEGEL, Olivier, 7332 BD Apeldoorn (NL); ANTOINE, Florian, 7332 BD Apeldoorn (NL); QUINTIN, Nicolas, 7332 BD Apeldoorn (NL)
(74) Representative: Dennemeyer & Associates S.A.

(57) **Abstract**

The invention relates to a handling device (1) for a heat pump (10). The handling device comprises a heat pump casing and one or more cross beams (2), configured to be connected to a base (12) of a heat pump casing (11), and two handling beams (3), with a first handling beam (3) being connected to a first end of each cross beam (2) and a second handling beam (3) being connected to a second end of each cross beam (2). The handling beams are provided with openings (4) for receiving gripping elements (7).

## Description

The invention relates to a handling device for a heat pump. In addition, the invention relates to heat pump and an assembly comprising the handling device and the heat pump. Additionally, the invention relates to a method for handling a heat pump.

Heating of water or air in buildings, such as heating water of a central heating system or heating of water for domestic use, may be accomplished by means of a heat pump system. One of the ways of characterising heat pump systems is related to the source medium that is used.

Such a heat pump system may for example be a ground source heat pump (GSHP) system or an air source heat pump (ASHP) system. In a GSHP system, calories are exchanged between the ground, or ground water, and a fluid, the fluid in particular being air or water wherein a refrigerant is used for the exchange. The calories in the ground may be extracted by capturing calories in a water table or by circulating a water-based circuit in the ground. In an ASHP system calories are exchanged between the air and a fluid, in particular air or water, wherein a refrigerant is used for the exchange.

In general, heat pump systems use refrigerants to transport heat from a source medium (typically air, ground, or ground water) to a destination medium (typically water or air).

In a first heat exchanger (evaporator) heat is transferred from the source medium to the refrigerant. The refrigerant is circulated through a network of piping and components, including at least the first heat exchanger, a compressor, an expansion valve and a second heat exchanger (condenser). In the second heat exchanger, heat is transferred from the refrigerant to the destination medium.

Monobloc heat pump systems are heat pump systems in which the heat exchangers, compressor and expansion valve are all integrated into the same heat pump casing. An example of a monobloc heat pump system is an air/water monobloc heat pump system, which is a single unit of heat pump system using air as source medium and water as a destination medium.

Heat pump systems comprise one or more heat pump casings in which the above-described elements are placed. The heat pump casing, as well as the elements in the casing, are generally made of steel. Heat pump casings are therefore heavy. Also, depending on the power of the heat pump system, heat pump casings may also be voluminous. The size of the heat pump casings in combination with the weight of the elements of which it is made up, make heat pump systems difficult to carry and position in an operating place by persons. Often, handling requires more than one person, for instance four persons.

In the case of air/water monobloc heat pump system, these constraints are even more marked because two heat exchangers, an expansion valve and a compressor are all integrated into a single, outdoor compatible casing. This makes the products particularly heavy (usually over 100kg). Also, such a heat pump system has an air source heat exchanger and an air duct. The dimensions of these elements are correlated with the power and acoustic performance to be achieved. The larger these elements are, the better the power output obtained, but the more difficult to handle.

Monobloc outdoor heat pump units therefore require the presence of several people (generally at least 4) or the use of a crane-type lifting device for their handling.

According to the prior art, handling can be facilitated by providing handles. However, the height for positioning these handles is limited by the height of the heat pump casing. Often, the handles are positioned too low, resulting in ergonomic issues. Because the handles are positioned on the heat pump casing, it is difficult for people to walk while lifting the heat pump case, as one's legs will bump into the heat pump casing.

According to an alternative solution, straps are provided which are to be passed under the heat pump casing or connected to the supports or feet of the heat pump casing. These straps may have handles or other means of fixing the straps to the shoulders. However, these straps can move during movement of the heat pump casing as the straps are not securely attached. This may cause shearing which may result in damage of the heat pump casing and/or the straps, which may cause the heat pump casing to fall from the straps. If the product falls, it may pose a significant safety risk to people in the vicinity of the product.

Furthermore, the heat pump casing may be provided with flat areas at the base of the heat pump casing to allow carrying. However, these flat areas are positioned at the lowest point of the product and are therefore not ergonomically satisfactory. The flat surfaces are also not compatible with the use of a lifting device.

In summary, lifting and carrying heat pump cases generate significant risks for the heat pump system, the environment, and people because the stability of the product is ensured by external and mobile elements.

The object of the invention is therefore to provide an improved way to handle heat pumps.

The object is solved by a handling device for a heat pump comprising a heat pump casing, the handling device comprising
- one or more cross beams, configured to be connected to a base of a heat pump casing and/or received by the base of the heat pump casing, and
- two handling beams, with a first handling beam being connected to a first end of each cross beam and a second handling beam being connected to a second end of each cross beam,
wherein the handling beams and/or cross beams are provided with openings for receiving gripping elements.

The gripping elements may be provided by straps, handles, ropes, chains, carabiners, hooks, beams, screwed or pinned elements or any other suitable gripping element that can be attached to the handling device by the openings or a combination thereof. Straps are particularly useful as straps are compact, flexible, and strong enough for this type of handling. The gripping elements, when connected to the handling device by means of the openings, are moveable to provide users with flexibility when carrying the handling device.

There is provided a handling device comprising, in particular rigid, elements, such as cross beams and handling beams. At least some of the elements can have a straight or curved shape, in particular along its length extension. The cross beams and the handling beams may be made of steel, including stainless steel, aluminum, copper, wood or any other suitable material.

The one or more cross beams and the two handling beams together form a rigid frame for carrying the heat pump casing.

The cross beams may have a bended or cornered shape. The cross beams may comprise a mid-section, having a length at least equal to the width of the base of the heat pump, and two cross beam end sections that are provided at an angle with respect to the mid-section and are provided at opposite ends of the mid-section. The cross beam end sections may be provided with openings for receiving gripping elements. By providing end sections, extending away from the mid-sections, at an angle, the heat pump can be locked into place, preventing the heat pump from sliding in the direction of the mid-section of the cross beam. Carrying and handling is facilitated by the end sections.

The handling device may comprise handling beam end sections provided at an angle with respect to the handling beam. The handling beam end sections may be provided with openings for receiving gripping elements. This makes it easier to carry the handling device. The risk of the handling device and heat pump hitting personnel's legs is reduced.

The cross beams and/or handling beams have openings to allow gripping elements, e.g. straps, to be connected to the handling device for manual handling or handling by crane. These gripping elements are therefore easy to install compared to the current solution thanks to the dedicated and possibly offset location of the openings. The openings may have rounded edges to prevent shearing and wearing of the gripping elements. This applies whether the handling is done manually or with the use of a crane type lifting device.

The gripping elements may be provided by straps, also known as lifting slings. The straps may have a width of 50 mm. The straps may have a straight pull load of 1000kg or more. The straps may be made from textile, such as polyester (polyethylene terephthalate, aramid, polyamide and/or polypropylene).

The base of the heat pump casing may be configured to allow one or more cross beams to be connected to it, for instance by having openings or a profile (e.g. rails) configured to receive a cross beam. Further locking means may be provided to securely fix the at least one cross beam to the base of the heat pump casing or to the openings or profiles, for instance using pins, screws etc.

The at least one cross beam may be connected to the base in a fixed manner, preventing the heat pump casing from moving relative to the handling device or even falling from the handling device. The handling device may be fixedly connected to the heat pump casing and the handling device cannot be unintentionally get dissociated from the heat pump casing, for instance by sliding or shearing.

The handling device is rigid and avoids tilting, vibrations or undulations that would cause additional handling efforts or risks. User safety is improved by avoiding the risk of tipping, falling and bumping the product with users or the transport environment. The stability of the heat pump is improved during transport, which among other things improves the lifetime of the heat pump: no shocks, overturn, oil displacement etc....

The handling device allows to handle the heat pump without packaging, such that it can be put directly on the intended installation place, for instance on rubber feet, wall/floor mounting frame etc..

This provides for a safe and ergonomic handling device for the transport of heat pump systems and parts thereof.

The handling device allows for direct carrying and provides the option to create offset openings which can be used to create offset handling points. This avoids shocks between the product and the user's legs.

There is no need for users to carry the heat pump casing by engaging the flat base of the heat pump casing with their hands. Instead, users can get a firm grip by lifting the handling device by means of the gripping elements (e.g. straps). The use of gripping elements allows users to install gripping elements with a length that is most suitable for the user from an ergonomic point of view. Also, longer gripping elements may be used to be used in combination with any kind of crane type lifting device.

According to an embodiment the handling beams are orientated perpendicular to the one or more cross beams.

A perpendicular connection provides for a stable and rigid frame.

According to an embodiment the openings have a length of at least 25 mm and a width of at least 2 mm.

The openings may have a length equal to or smaller than 150mm and a width equal to or smaller than 80mm. Preferably, the openings have a length of 50 mm or greater, or more preferably 55 mm or greater. The openings may have a length that matches the width of the gripping element than the width of the gripping element, to prevent unwanted movements. The openings may have a length that is equal to or less than 20% or 10% greater than the width of the gripping element, to prevent unwanted movements while facilitating receiving the gripping device by the opening.

Preferably, the width of the opening is equal to or more than 10 mm, equal to or more than 20 mm or equal to or more than 30 mm.

The length is measured in a direction parallel to an elongated body axis of the longitudinal beams and the width is measured in a direction perpendicular to the length. In use, the length is measured in a horizontal direction and the width in a vertical direction.

The specified lengths allow the openings to receive straps that are sufficiently strong to handle the handling device carrying a heat pump.

Alternatively, the openings are circular, having a diameter in the range of 8 - 200 mm, e.g. 8, 12 or 20 mm, to allow standard screws to be inserted.

According to an embodiment the handling device comprises two parallel cross beams.

Provision of two cross beams provides a much more secure connection to the heat pump casing and makes the entire handling device more rigid. This also prevents the product from tipping over and ensures that the product remains horizontal during handling.

According to an embodiment the handling device comprises releasable locking means for connecting the one or more cross beams to the base of a heat pump casing.

The one or more cross beams may be connected to the base of the heat pump casing by means of screws, pins, axles, etc. The base of the heat pump casing may be provided with a slot or hollow member configured to receive a cross beam.

Providing releasable locking means allows to remove the cross beams (as well as the handling beams) after positioning the heat pump casing at the desired position. This provides the advantage that the handling device can be re-used for handling other heat pumps and doesn't take up space once the heat pump is installed.

According to an embodiment the handling device comprises further releasable locking means for connecting the handling beams to the one or more cross beams. This makes the handling device more compact when not in use.

The further releasable locking means for connecting the handling beams to the one or more cross beams may be provided by fasteners. An example of a fastener is a spring lock as explained in more detail below.

Providing further releasable locking means allows to remove the longitudinal beams after positioning the heat pump casing at the desired position.

So, the cross beams may be fixed in two different ways: by connecting to the heat pump casing, in particular to respective profiles configured to receive a cross beam and/or by connecting the one or more cross beams to the handling beams.

According to an embodiment the handling beams comprise end sections that
- are configured to extend beyond a footprint of the heat pump casing when connected to the one or more cross beams and/or
- extend beyond the further releasable locking means.

The handling beams comprise two end sections on opposite ends of the handling beams that extend beyond the footprint or base of the heat pump casing.

By having handling beams that extend beyond the further releasable locking means it is established that openings can be provided away from the heat pump casing or offset from a footprint from the heat pump casing (once in place) to allow easy handling.

According to an embodiment the end sections comprise openings for receiving gripping elements.

Preferably, each end section comprises at least one opening for receiving a gripping element.

By providing the openings at the end sections of the handling beams, preferably close to the end of the handling beams, gripping elements can be attached to the handling beams at a location away from or offset from the heat pump casing, allowing sufficient legroom for people using the handling device to carry a heat pump casing. The openings, and thus the gripping elements, may be positioned away from the cross beams and the heat pump casing.

This also ensures better stability of the assembly by limiting the angular displacement of the heat pump compared to the horizontal plane in case of different lifting heights between the different points. This difference in lifting heights can be caused by different factors, as long as there is an asymmetry in one of these elements: length of the fasteners, type of hooking knot, height of the lifting points (e.g. crane fork or men's handle), horizontality of the floor etc...

According to an embodiment there is provided a handling device comprising openings which are positioned such that when the heat pump casing is connected to the at least one cross beam the openings are offset with respect to a footprint of the heat pump casing.

Preferably, at least four openings are provided off set with respect to the footprint of the heat pump casing. Preferably, openings are provided at each end section of each handling beam.

Preferably, the offset is at least 5 mm, 10mm or 20mm in the longitudinal direction of the handling beams. Preferably, the offset is at least 5mm, 10mm, or 20mm in a horizontal direction perpendicular to the longitudinal direction of the handling beams. Preferably, the offset is less than 250mm in all horizonal directions, including in particular in the longitudinal direction of the handling beam, to limit the size of the handling device. Longer handling beams may cause damage during transport.

The offset is defined as the distance between the footprint of the heat pump casing and the side of the opening closest to the footprint of the heat pump casing. The footprint is defined as the horizontal space occupied by the heat pump casing and will in practice match the base of the heat pump casing. The term horizontal is used with reference to the normal intended operating orientation of the heat pump and will in practice be parallel to the base of the heat pump casing.

This allows for easy and stable handling and provides sufficient legroom for persons carrying the handling device.

The handling beams may further comprise a mid-section provided in between the end sections that is configured to be within or along the footprint of the heat pump casing when connected to the one or more cross beams. These mid-sections may also comprise openings for receiving gripping elements.

According to an embodiment the handling device comprises gripping elements connected to the openings.

The gripping element may be integrated into the handling device or may be provided in a removable manner.

According to an embodiment the gripping element is selected from a strap, a handle, a rope, a chain, a carabiner, a hook, a beam, a screwed or pinned element or any other suitable gripping element that can be attached to the handling device by the openings or a combination thereof.

According to a further aspect there is provided a heat pump casing comprising at least one heat exchanger, the heat pump casing having a base which is configured to be connected to and/or receive one or more cross beams of a handling device as described.

The base of the heat pump casing may be configured to receive a cross beam. The base of the heat pump casing may comprise a closed or open profile through which a cross beam can be inserted without the need for lifting or tilting the heat pump casing.

The profile may be a round or rectangular hollow closed profile extending along at least part of the base. A closed profile surrounds the cross beam. The profile may be a U-shape profile. The legs of the U-shape may point away from the heat pump casing, creating an open profile, or may point towards the heat pump casing, creating a closed profile. The profile may also be formed by two separate parallel, downwardly directed plates, forming two rails in between the cross beam can be inserted. This creates an open profile. The profile allows for the unobstructed insertion and removal of the cross beam. Releasable locking means may be provided to lock the cross beam in place.

The profile may also function as the feet of the heat pump casing on which the heat pump rests.

Further provided may be releasable locking means to lock the cross beam in place when inserted into the profile. This prevents the cross beam and the heat pump casing from sliding with respect to each other.

According to an embodiment, the one or more handling beams are each provided with at least four beam openings for receiving cross beams.

The four beam openings are provided in pairs, each pair being symmetrically positioned with respect to a longitudinal mid-point of the handling beam. This allows the handling device to be used for different type of heat pumps, as it allows to position pairs of cross beams at different mutual distances from each other.

According to a further aspect there is provided an assembly of a handling device as described and a heat pump as described, wherein the handling device is connected to the heat pump casing.

According to a further aspect there is provided a method for handling a heat pump comprising a heat pump casing, the method comprises:
- providing one or more cross beams,
- positioning the one or more cross beams underneath a base of the heat pump casing,
- connecting two handling beams to opposite ends of the one or more cross beams the handling beams and/or cross beams being provided with openings for receiving gripping elements,
- attaching gripping elements to the handling device,
- moving the heat pump to a destination location using the gripping elements,
- removing the gripping elements from the openings.

The cross beams may be connected to the base of the heat pump casing. The cross beams may be inserted into a profile provided on the base of the heat pump casing.

When straps are used as gripping element, the straps may easily be partially passed through the respective openings. The loose ends of the straps can be joined to create a loop.

Moving the heat pump may be done manually by lifting the handling device with the heat pump by means of the gripping elements. Moving the heat pump may also be done mechanically by means of a crane which can lift the handling device with the heat pump by means of the gripping elements.

According to an embodiment the method comprises
- removing the handling beams by disconnecting the handling beams from the one or more cross beams and optionally removing the cross beams.

In the figures, the subject-matter of the invention is schematically shown, wherein identical or similarly acting elements are usually provided with the same reference signs.
- Figures 1a-1c: schematically shows different views of a handling device according to an embodiment,
- Figures 2a-2d: schematically show different views of the handling device with heat pump according to an embodiment,
- Figure 3a-3b: schematically show a handling device with a heat pump attached to a crane,
- Figure 4: schematically shows a handling device according to a further embodiment,
- Figures 5a-5c: schematically show handling devices according to further embodiments,
- Figure 6a-6b: schematically show a handling device according to a further embodiment.

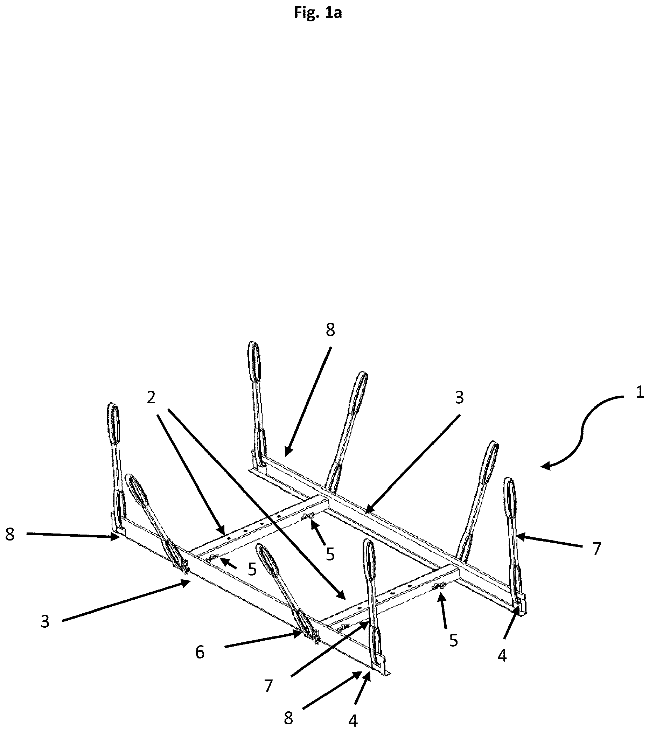

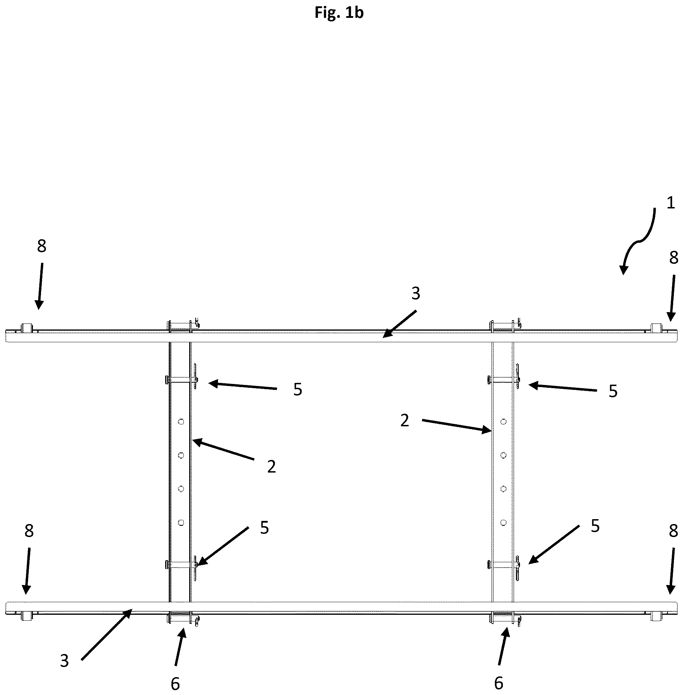

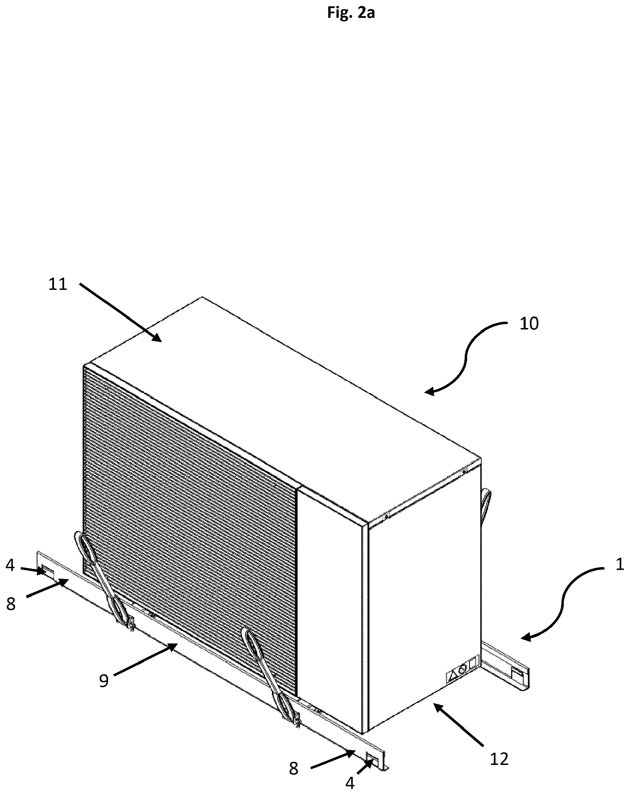

With reference to Figures 1a-1c and 2a-2d, a handling device 1 is shown for handling a heat pump 10. Fig.'s 1a-1b show a handling device 1 without heat pump 10, Fig. 1a showing a perspective view and Fig. 1b showing a bottom view.

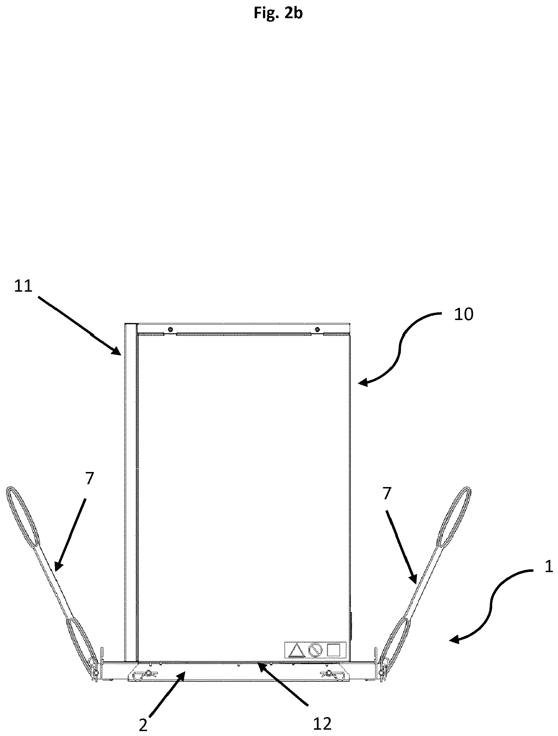

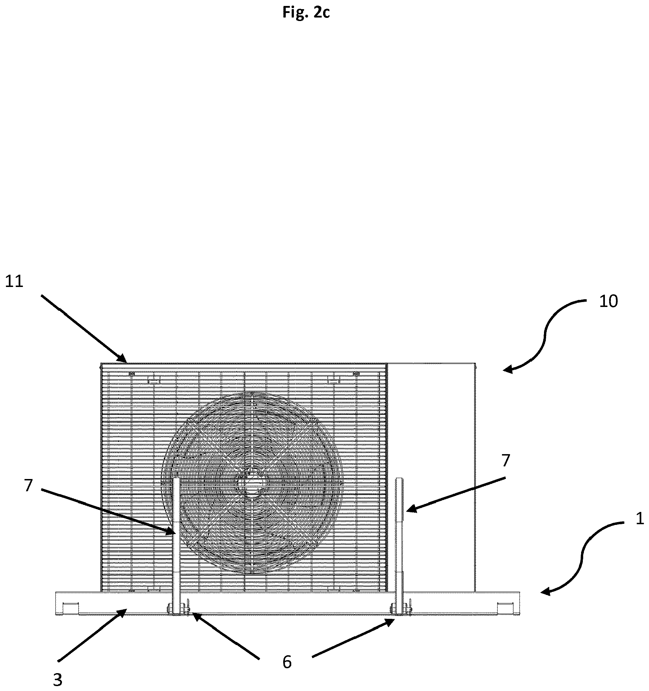

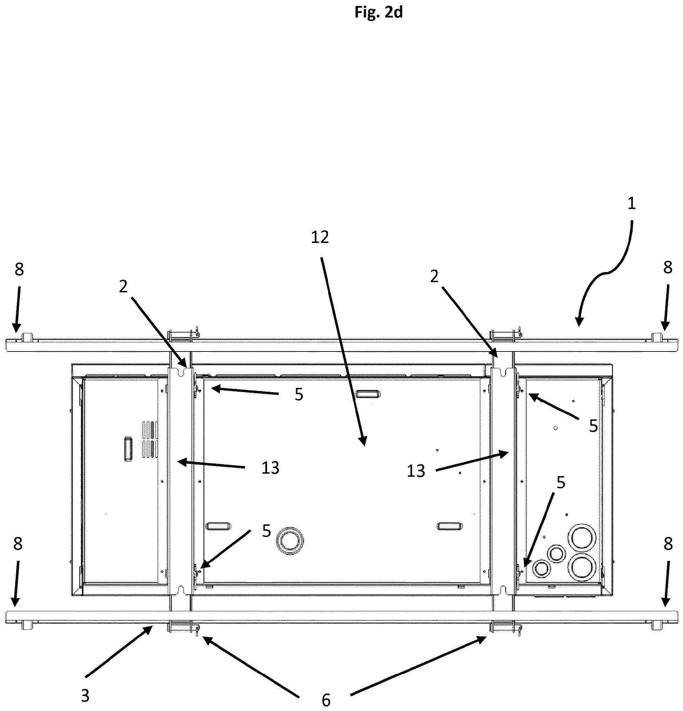

Fig.'s 2a-2d show a handling device with heat pump 10. Fig. 2a schematically shows a perspective view of the handling device 1 with a heat pump 10. Fig. 2b schematically shows a side view of the handling device 1 in the direction of the handling beams 3. Fig. 2c schematically shows a side view of the handling device 1 in the direction of the cross beams 2. Fig. 2d schematically shows a bottom view of the handling device 1 with heat pump of Fig. 2a.

The heat pump 10 has a heat pump casing 11. The heat pump casing 11 has a base 12. The base 12 may be provided with legs to support the heat pump casing 11. The base 12 may further be provided with means to connect to cross beams 2, as will be described in more detail below.

According to the embodiment shown, the handling device 1 comprises two cross beams 2. The cross beams 2 are configured to be connected to the base 12 of the heat pump casing 11. The cross beams 2 are parallel to each other and at a distance equal to or smaller than the width of the footprint of the heat pump casing 11. As can best be seen in Fig. 2d, the base 12 of the heat pump 10 has a profile 13, e.g. a slot or hollow member, configured to receive a cross beam 2 and allow connecting the cross beam 2 to the base 12.

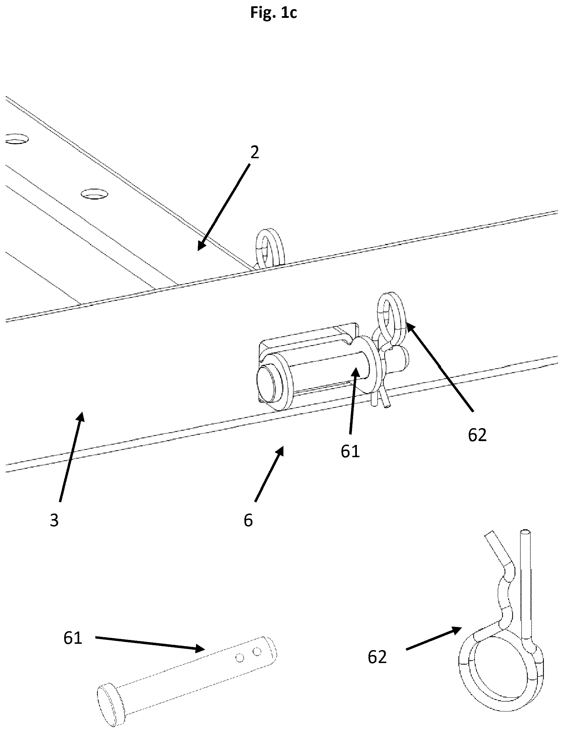

The handling device further comprises two handling beams 3. As shown in Fig. 1, a first handling beam 3 is connected to first ends of the two cross beams 2 and a second handling beam 3 is connected to second ends of the two cross beams 2. The handling beams 3 and the cross beams 2 form a rigid frame. The handling beams 3 are parallel to each other. The handling beams 3 are perpendicular to the cross beams 2. The handling beams 3 and the cross beams 2 are all in one plane, which in use, is a horizontal plane.

The cross beams 2 and handling beams 3 are provided with openings 4 for receiving straps 7 or other suitable gripping elements. The openings have a length of at least 25 mm and a width of at least 2 mm. As shown in Fig. 2a, the gripping elements (straps) are provided in openings of the cross beams.

As shown in Fig. 2, the handling beams 3 have end sections 8 which extend beyond a footprint or the base 12 of the heat pump casing 11. These end sections 8 comprise openings 4 for receiving straps 7 or other suitable gripping elements. As can be seen in Fig. 2, the openings 4 provided in the end sections 8 are positioned offset with respect to the base 12 of the heat pump casing 11, making handling easier and more ergonomically.

The handling beams 3 may further comprise a mid-section 9 provided in between the end sections 8 that is configured to be within or along the footprint or base 12 of the heat pump casing 11 when connected to the one or more cross beams 2. These midsections may also comprise openings 4 for receiving gripping elements, e.g. straps 7.

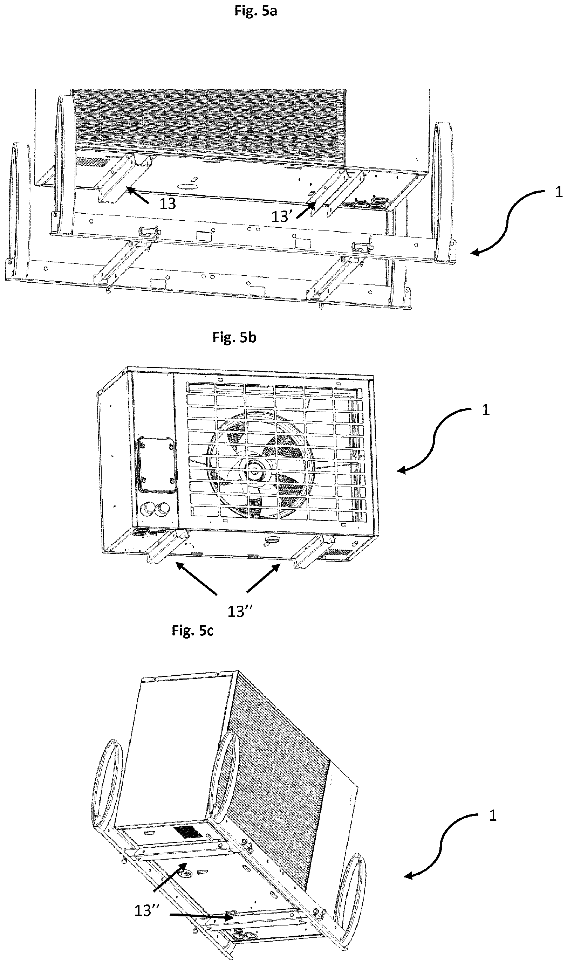

Further shown in Fig. 1 are releasable locking means 5 for connecting the one or more cross beams 2 to the base 12 of the heat pump casing 11. Not shown, but the base 12 of the heat pump casing 11 is also provided with releasable locking means which are configured to connect to the releasable locking means 5 of the cross beams 2. In the embodiment shown, the releasable locking means 5 may be screw holes, allowing the connection to be made with screws. The base 12 of the heat pump casing 11 may comprise a closed or open profile through or in which a cross beam can be inserted without the need for lifting or tilting the heat pump casing. The profile and the cross beam 2 may have (screw) holes. By aligning the holes, a screw or spring lock (as explained in more detail below with reference to Fig. 5a-c) the like can be inserted.

Fig. 1 further shows further releasable locking means 6 for connecting the handling beams 3 to the cross beams 2. The further releasable locking means 6 may be any kind of suitable connection means to fixedly connect the handling beams 3 to the cross beams 2. The further releasable locking means 6 are provided in the mid-sections 9 of the handling beams 3.

Preferably, the further releasable locking means 6 can be locked and released without the need of tools. The further releasable locking means 6 are such that they cannot be released unintentionally.

An example of releasable locking means 6 is shown in more detail in Fig. 1c. showing a spring lock. The spring lock comprises an axle 61 and a spring pin lock 62. Fig. 1c also shows a more detailed view of axle 61 and spring pin lock 62. The cross beam 2 protrudes through a beam opening in the handling beam 3. The part of the cross beam 2 protruding comprises one or more holes configured to receive the axle 61. The axle 61 may comprises a head member, the head member having a width greater than the one or more holes, preventing the axle 61 from further passing through the one or more holes. An end part of the axle 61, away from the heat member, comprises a through hole for receiving the spring pin lock 62. The spring pin lock 62 is configured to fix the axle 61 and thereby fixing the handling beam 3 to the cross beam 2. The spring pin lock is a wired device, the wire comprising a spiral part and two legs. A first leg is configured to go through the through hole in the axle 61, a second leg is configured to follow the shape of the axle. The spiral part is configured to force the legs towards each other, thereby clamping the spring pin lock to the axle 61 and securing the axle 61.

A similar spring lock may be used for connecting the cross beams 2 to the base of the heat pump casing 11.

Fig.'s 3a and 3b show two different embodiments of handling the handling device 1 with a heat pump 10 using a crane 20. Crane 20 is only shown partially in Fig.'s 3a - 3b.

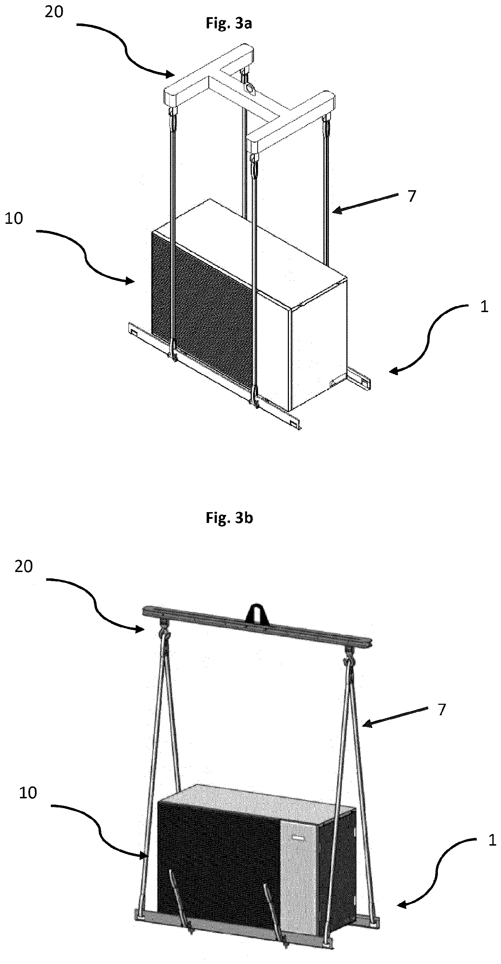

As shown by way of example in Fig. 3b, some openings 4 may be used to handle the handling device 1 with a crane, while other openings 4 may be used to provide gripping elements, e.g. straps 7 which can be handled by operators. This allows for lifting the handling device 1 with the crane and allowing operators to use the gripping elements 7 not connected to the crane to manoeuvre the handling device 1 to the exact desired position.

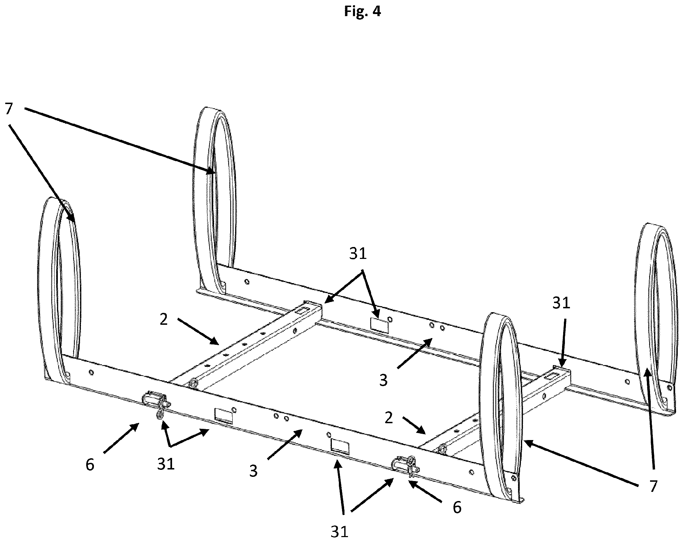

Fig. 4 schematically shows a further embodiment, wherein, the one or more handling beams 3 are each provided with at least four beam openings 31 for receiving cross beams 2. The four beam openings 31 are provided in pairs, each pair being symmetrically positioned with respect to a longitudinal mid-point of the handling beam. In Fig. 4 cross beams 2 are inserted in the beam openings 31 furthest away from the mid-point of the handling beam 3.

The base 12 of the heat pump casing 11 may be configured to receive a cross beam 2. Different types of profiles 13 may be provided on the base 12 of the heat pump casing 11. Examples are provided in Figures 5a - 5c. The left-hand side of Fig. 5a shows a closed profile 13, the right-hand side of Fig. 5b shows an open profile 13', not completely enclosing the cross beam 2 when inserted. The latter may also be referred to as rails. Both profiles 13, 13' allow insertion of a cross beam 2 without the need to lift or move the heat pump casing 11.

In Fig. 5a the profile 13 has a U-shape, the legs of the profile 13 pointing towards the base 12. The legs are connected to the base 12. In the embodiment shown in Fig. 5b, an alternative profile 13" is provided where the distal ends of the legs have flanges to provide for a more secure connection to the base 12.

Fig. 5c shows the embodiment of Fig 5b, now with the cross beams 2 received by the profile.

The profiles may also function as the feet of the heat pump casing on which the heat pump rests.

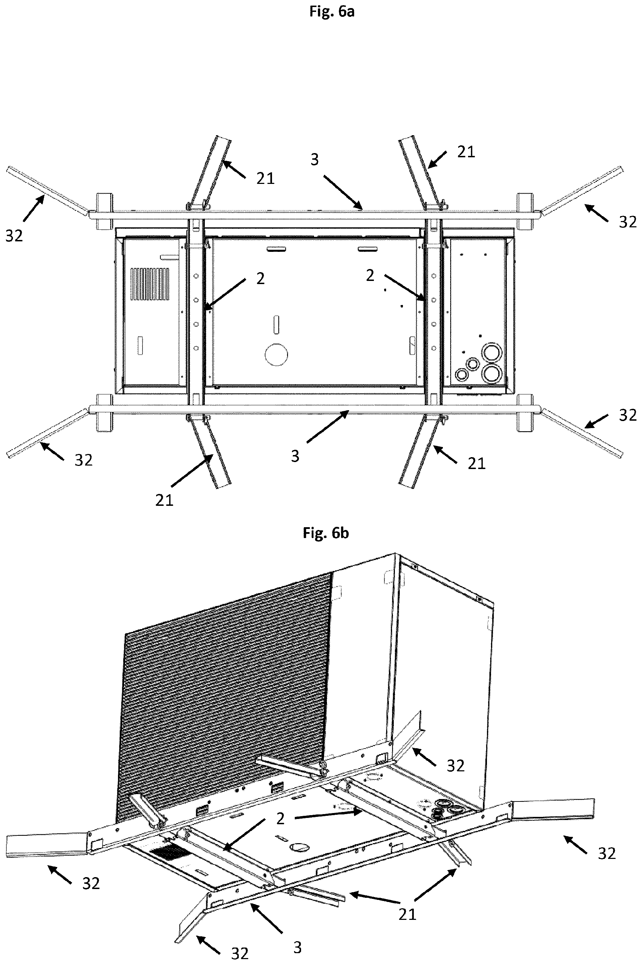

Fig. 6a and 6b show an embodiment where the cross beams have a bended or cornered shape. The cross beams may comprise a mid-section, having a length at least equal to the width of the base of the heat pump, and two cross beam end sections 21 that are provided at an angle with respect to the mid-section and are provided at opposite ends of the mid-section.

Fig. 6a and 6b further show an embodiment where the handling device 1 may comprise handling beam end sections 32 provided at an angle with respect to the handling beam 3.

It will be understood that the cross beam end sections 21 and the handling beam end sections 32 can be applied independently and combined.

The invention is not limited to the embodiments shown in the drawings and described hereinbefore, which may be varied in different manners within the scope of the claims and their technical equivalents.

### Reference Signs

- 1.: Handling device
- 2.: Cross beams
- 3.: Handling beams
- 4.: Openings
- 5.: Releasable locking means
- 6.: Further releasable locking means
- 7.: Gripping elements
- 8.: End section
- 10.: Heat pump
- 11.: Heat pump casing
- 12.: Base
- 13.: Slot or hollow member
- 20.: Crane
- 21.: Cross beam end sections
- 31.: Beam openings
- 32.: Handling beams end sections
- 61.: Axle
- 62.: Spring pin lock

## Claims

1. Handling device (1) for a heat pump (10) comprising a heat pump casing (11), the handling device (1) comprising
- one or more cross beams (2), configured to be connected to a base (12) of a heat pump casing (11) and/or received by the base (12) of the heat pump casing (11), and
- two handling beams (3), with a first handling beam (3) being connected to a first end of each cross beam (2) and a second handling beam (3) being connected to a second end of each cross beam (2),
wherein the handling beams and/or cross beams (2) are provided with openings (4) for receiving gripping elements.

2. Handling device (1) according to claim 1, wherein the handling beams (3) are orientated perpendicular to the one or more cross beams (2).

3. Handling device (1) according to any one of the preceding claims, wherein the openings (4) have a length of at least 25 mm and a width of at least 2 mm.

4. Handling device (1) according to any one of the preceding claims, wherein the handling device (1) comprises two parallel cross beams (2).

5. Handling device (1) according to any one of the preceding claims, comprising releasable locking means (5) for connecting the one or more cross beams (2) to the base (12) of a heat pump casing (11).

6. Handling device (1) according to any one of the preceding claims, wherein the handling device (1) comprises further releasable locking means (6) for connecting the handling beams (3) to the one or more cross beams (2).

7. Handling device (1) according to claim 6, wherein the handling beams (3) comprise end sections (8) that
- are configured to extend beyond a footprint of the heat pump casing (12) when connected to the one or more cross beams (2) and/or
- extend beyond the releasable locking means (6).

8. Handling device (1) according to claim 7, wherein the end sections (8) comprise openings (4) for receiving gripping elements.

9. Handling device according to any one of the preceding claims, comprising openings (4) which are positioned such that when the heat pump casing (11) is connected to the at least one cross beams (2) the openings (4) are offset with respect to a footprint of the heat pump casing (11).

10. Handling device (1) according to any one of the preceding claims, wherein the handling device (1) comprises gripping elements (7) connected to the openings (4).

11. Handling device (1) according to any one of the preceding claims, wherein the gripping element is selected from a strap, a handle, a rope, a chain, a carabiner, a hook, a beam, a screwed or pinned element or any other suitable gripping element that can be attached to the handling device by the openings or a combination thereof.

12. Heat pump (10) comprising a heat pump casing (11) having a base (12) which is configured to be connected to and/or receive one or more cross beams (2) of a handling device (1) according to any one of the claims 1 to 11.

13. Assembly of a handling device (1) according to any one of the claims 1-11 and a heat pump according to claim 11, wherein the handling device (1) is connected to the heat pump casing (11).

14. Method for handling a heat pump (10) comprising a heat pump casing (11), the method comprises:
- providing one or more cross beams (2),
- positioning the one or more cross beams (2) underneath a base (12) of the heat pump casing (11),
- connecting two handling beams (3) to opposite ends of the one or more cross beams (2), the handling beams (3) being provided with openings (4) for receiving gripping elements (7),
- attaching gripping elements (7) to the handling device (1),
- moving the heat pump (10) to a destination location using the gripping elements (7),
- removing the gripping elements (7) from the openings (4).

15. Method according to claim 14, wherein the method further comprises:
- removing the handling beams (3) by disconnecting the handling beams (7) from the one or more cross beams (2) and optionally removing the cross beams (2).
